# EUROPEAN PATENT APPLICATION

(11) **EP 4 611 320 A1**
(43) Date of publication of application: **03.09.2025**
(21) Application number: 22963048.8
(22) Date of filing: 26.10.2022
(51) Int. Cl.: H04L 27/00

(54) **COMMUNICATION METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/127754
(87) International publication number: WO 2024/087064

(57) **Abstract**

Embodiments of the present disclosure relate to the technical field of mobile communications, and provide a communication method, an electronic device, and a storage medium. The communication method is applied to an access point device. The method comprises: determining a first radio frame, the first radio frame comprising first identification information, wherein at a first time point, the first identification information indicates a first quantity of sensing measurement setups (MS) supported to be set up by the access point device at the first time point, and at a second time point, the first identification information indicates a second quantity of MS supported to be set up by the access point device at the second time point, the first quantity being different from the second quantity; and sending the first radio frame. The embodiments of the present disclosure provide a method for interaction of sensing capability information.

## Description

### TECHNICAL FIELD

Embodiments of the present disclosure relate to the field of mobile communication technology, and more particularly relate to a communication method, an electronic device, and a storage medium.

### BACKGROUND

With the rapid development of the mobile communication technology, a wireless fidelity (Wi-Fi) technology has made a great progress in terms of transmission rate and throughput. At present, research content of the Wi-Fi technology includes, for example, a 320MHz bandwidth transmission, an aggregation and coordination of multiple frequency bands, etc. and its main application scenarios of the Wi-Fi technology include, for example, a video transmission, an augmented reality (AR), a virtual reality (VR), etc.

During an establishment of a sensing session, a sensing initiator and a sensing responder need to interact with each other in terms of sensing capability information to facilitate the subsequent measurement setup (MS) process.

### SUMMARY

Embodiments of the present disclosure provide a communication method, an electronic device, and a storage medium to provide a way to interact in terms of sensing capability information.

In an aspect, embodiments of the present disclosure provide a communication method, which is performed by an access point and includes: determining a first radio frame, in which the first radio frame includes first identification information; at a first moment, the first identification information indicates a first numeric count of sensing measurement setups (MSs) that the access point supports to establish at the first moment; at a second moment, the first identification information indicates a second numeric count of MSs that the access point supports to establish at the second moment; and the first numeric count is different from the second numeric count; and sending the first radio frame.

In another aspect, embodiments of the present disclosure further provide a communication method, which is performed by a station and includes: receiving a first radio frame, and the first radio frame includes first identification information. At a first moment, the first identification information indicates a first numeric count of sensing measurement setups (MSs) that an access point supports to establish at the first moment; at a second moment, the first identification information indicates a second numeric count of MSs that the access point supports to establish at the second moment; and the first numeric count is different from the second numeric count.

In another aspect, embodiments of the present disclosure further provide an electronic device, which is an access point and includes: a determining module configured to determine a first radio frame, in which the first radio frame includes first identification information; at a first moment, the first identification information indicates a first numeric count of sensing measurement setups (MSs) that the access point supports to establish at the first moment; at a second moment, the first identification information indicates a second numeric count of MSs that the access point supports to establish at the second moment; and the first numeric count is different from the second numeric count; and a sending module configured to send the first radio frame.

In another aspect, embodiments of the present disclosure further provide an electronic device, which is a station and includes: a receiving module configured to receive a first radio frame, and the first radio frame includes first identification information. At a first moment, the first identification information indicates a first numeric count of measurement setups (MSs) that an access point supports to establish at the first moment; at a second moment, the first identification information indicates a second numeric count of MSs that the access point supports to establish at the second moment; and the first numeric count is different from the second numeric count.

Embodiments of the present disclosure further provide an electronic device, which includes a memory, a processor, and a computer program stored in the memory and executable on the processor. The processor implements one or more methods according to embodiments of the present disclosure when executing the program.

Embodiments of the present disclosure further provide a computer-readable storage medium, which has stored therein a computer program that, when executed by a processor, causes one or more methods according to embodiments of the present disclosure to be implemented.

In embodiments of the present disclosure, the access point (AP) determines and sends the first radio frame, and the first radio frame includes first identification information. At the first moment, the first identification information indicates the first numeric count of sensing measurement setups (MSs) that the access point supports to establish at the first moment; at the second moment, the first identification information indicates the second numeric count of MSs that the access point supports to establish at the second moment; and the first numeric count is different from the second numeric count. The AP indicates capability information of the numeric count of MSs that the AP supports to establish through the first radio frame, thereby further improving an interaction of sensing capability information.

Additional aspects and advantages of embodiments of the present disclosure will be given in part in the following descriptions, which will become apparent from the following descriptions, or will be learned from the practice of the present disclosure.

### BRIEF DESCRIPTION OF THE DRAWINGS

In order to clearly illustrate the technical solutions in embodiments of the present disclosure, the accompanying drawings to be used in the description of embodiments of the present disclosure will be briefly introduced below. Apparently, the drawings in the following description only show some embodiments of the present disclosure. For those of ordinary skill in the art, other drawings may also be obtained according to these drawings without any creative effort.
FIG. 1 is a first flowchart of a communication method according to an embodiment of the present disclosure.
FIG. 2 is a first schematic diagram of a first example of an embodiment of the present disclosure.
FIG. 3 is a second schematic diagram of a first example of an embodiment of the present disclosure.
FIG. 4 is a third schematic diagram of a first example of an embodiment of the present disclosure.
FIG. 5 is a second flowchart of a communication method according to an embodiment of the present disclosure.
FIG. 6 is a first schematic block diagram of an electronic device according to an embodiment of the present disclosure.
FIG. 7 is a second schematic block diagram of an electronic device according to an embodiment of the present disclosure.
FIG. 8 is a third schematic block diagram of an electronic device according to an embodiment of the present disclosure.

### DETAILED DESCRIPTION

The term "and/or" in embodiments of the present disclosure describes an association relationship of associated objects, indicating that three relationships may exist. For example, A and/or B may represent three situations where: A exists alone, A and B exist simultaneously, and B exists alone. The character "/" generally represents that objects associated before and after the character are in an "or" relationship.

In embodiments of the present disclosure, the term "a/the plurality of" refers to two or more than two, and other quantifiers are similar thereto.

Reference will now be made in detail to illustrative embodiments, examples of which are illustrated in the accompanying drawings. The following description refers to the accompanying drawings in which the same numbers in different drawings repre sent the same or similar elements unless otherwise represented. The implementations set forth in the following description of illustrative embodiments do not represent all implementations consistent with the present disclosure. Instead, they are merely examples of devices and methods consistent with some aspects of the present disclosure as recited in the appended claims.

Terms used in the present disclosure are only for the purpose of describing specific embodiments, but should not be construed to limit the present disclosure. As used in the present disclosure and the appended claims, "a/an", "the" and "this" in singular forms are intended to include plural forms, unless clearly indicated in the context otherwise. It should also be understood that, the term "and/or" used herein represents and contains any or all possible combinations of one or more associated items listed.

It should be understood that, although terms such as "first," "second" and "third" may be used in the present disclosure for describing various information, these information should not be limited by these terms. These terms are only used for distinguishing information of the same type from each other. For example, first information may also be referred to as second information, and similarly, the second information may also be referred to as the first information, without departing from the scope of the present disclosure. For example, as used herein, the term "if" may be construed to mean "when", "upon" or "in response to determining" depending on the context.

The technical solutions in embodiments of the present disclosure will be described clearly and completely below with reference to the accompanying drawings in embodiments of the present disclosure. Apparently, the described embodiments are only some embodiments of the present disclosure, rather than all embodiments of the present disclosure. All other embodiments obtained by those of ordinary skill in the art based on embodiments of the present disclosure without making creative works fall within the protection scope of the present disclosure.

Embodiments of the present disclosure provide a communication method, an electronic device, and a storage medium to provide a way to interact in terms of sensing capability information.

The method and the apparatus are based on a same application concept. Since the method and the apparatus solve the problem in a similar principle, regarding an implementation of the apparatus and the method, reference may be made to each other, and repeated parts thereof will not be elaborated.

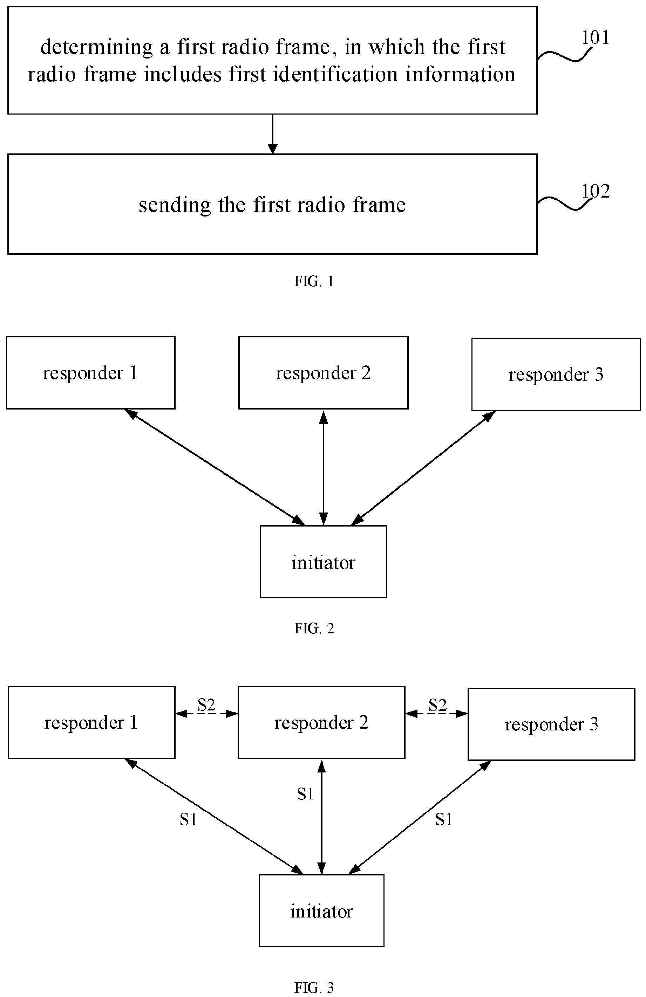

As shown in FIG. 1, an embodiment of the present disclosure provides a communication method. Optionally, the method may be performed by an access point (AP). The method may include the following steps.

In step 101, a first radio frame is determined. The first radio frame includes first identification information.

At a first moment, the first identification information indicates a first numeric count of sensing measurement setups (MSs) that the access point supports to establish at the first moment; at a second moment, the first identification information indicates a second numeric count of MSs that the access point supports to establish at the second moment; and the first numeric count is different from the second numeric count.

As a first example, referring to FIG. 2 to FIG. 4, an architecture of WLAN sensing and a WLAN sensing process applied in the communication method according to embodiments of the present disclosure are first introduced.

FIG. 2 shows a schematic diagram of an architecture of a WLAN sensing (process). A sensing initiator (or initiator) initiates a WLAN sensing (for example, initiates a WLAN sensing session), and a plurality of sensing responders (or sensing receivers) or responders, e.g., responder 1, responder 2, and responder 3 in FIG. 2, may exist to respond it. A plurality of associated or unassociated sensing responders of the WLAN sensing may respond in a case where the sensing initiator initiates the WLAN sensing.

Referring to FIG. 3, a sensing initiator communicates with a sensing responder through a communication connection, e.g., communication connection S1 as shown; and the sensing responders communicate with each other through communication connection S2.

Each sensing initiator may be one client; each sensing responder (in this example, of sensing responder 1 to sensing responder 3) may be a station (STA) or an access point (AP). In addition, the STA and the AP may assume a plurality of roles in a WLAN sensing process. For example, in the WLAN sensing process, the STA may also serve as the sensing initiator, and the sensing initiator may be a sensing transmitter, a sensing receiver, or both, or neither. In the WLAN sensing process, the sensing responder may also be the sensing transmitter, the sensing receiver, or both.

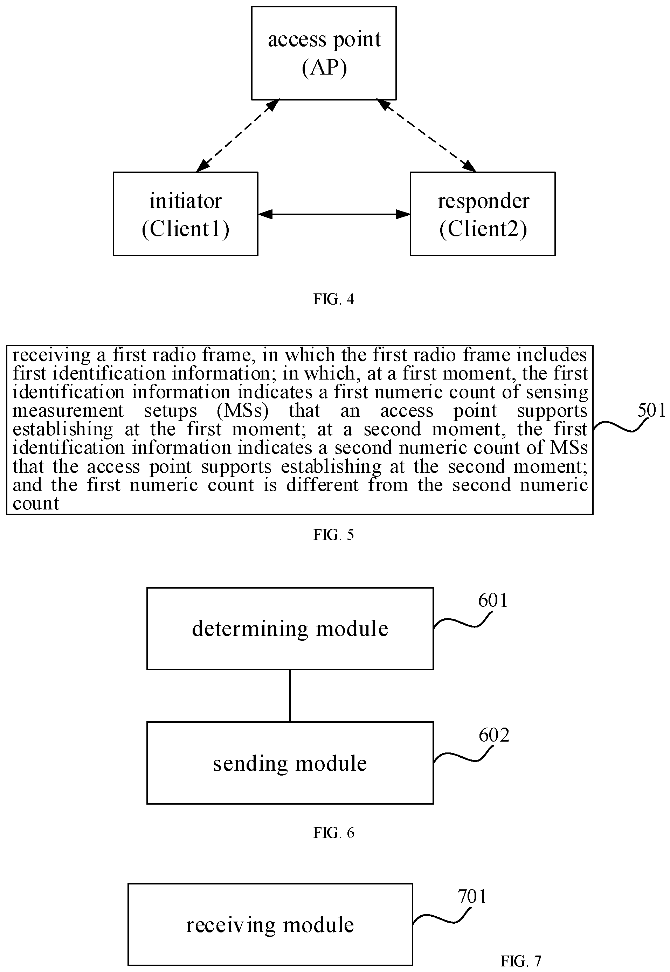

As another architecture, as shown in FIG. 4, a sensing initiator and a sensing responder may also both be clients, and the two may communicate with each other by connecting to a same access point (AP). In FIG. 4, Client1 is the sensing initiator, and Client2 is the sensing responder.

During an establishment of a sensing session, the sensing initiator and the sensing responder need to interact in terms of sensing capability information to facilitate the subsequent MS establishment; a capability that need to be interacted with include, for example, a capacity for supporting the sensing, a capacity for supporting a sensing by proxy (SBP), and a bandwidth (BW) capability for supporting a sensing measurement. After both parties understand this capability information, an MS establishment process may be performed. In embodiments of the present disclosure, the AP also sends the first radio frame to the STA or other sensing initiator device, the first radio frame carries the first identification information, and indicates numeric count information of the MS that the AP supports to establish through the first identification information.

Specifically, at the first moment, the first identification information indicates the first numeric count of sensing measurement setups (MSs) that the access point supports to establish at the first moment; at the second moment, the first identification information indicates the second numeric count of MSs that the access point supports to establish at the second moment; and the first numeric count is different from the second numeric count. For example, in a case where the first radio frame is sent periodically, for example, the first moment and the second moment are respectively a time within adjacent transmission periods of sending the first radio frame: in a first period, the AP sends the first radio frame, and the first identification information indicates that the first numeric count of MSs that the AP may support to establish at this moment is M. It can be understood that, in a first transmission period of the first radio frame after the AP establishes an initial association with the STA, M is a maximum value of the numeric count of MSs that the AP may support to establish. Further, in the first period, the AP establishes N MSs, and a type of the MSs may be a triggered based sounding (TB) manner, a non-triggered based sensing (Non-TB based sensing, NTB) manner or an SBP manner. Then, the AP sends the first radio frame again in a case where a second period arrives, and the first identification information indicates that the second numeric count of MSs that the AP may support to establish at this moment is M-N; where M and N are positive integers.

In this way, the AP indicates the numeric count information of the MS that the AP may support to establish at a current moment through the first identification information, so that the sensing initiator does not blindly send an MS request frame or an SBP initiator does not blindly send an SBP request frame, saving signaling messages and ensuring other communication capabilities of a device (such as data communication capabilities, etc.).

It can be understood that in a case where the AP fails to successfully establish any MS within a time interval between the first moment and the second moment, the first numeric count and the second numeric count may also be the same.

In step 102, the first radio frame is sent.

Optionally, in embodiments of the present disclosure, the first radio frame includes at least one of: a beacon frame, a probe response frame, or an unsolicited probe response frame. The first radio frame may be a broadcast message frame.

In embodiments of the present disclosure, the AP determines and sends the first radio frame, and the first radio frame includes first identification information. At the first moment, the first identification information indicates the first numeric count of sensing measurement setups (MSs) that the access point supports to establish at the first moment; at the second moment, the first identification information indicates the second numeric count of MSs that the access point supports to establish at the second moment; and the first numeric count is different from the second numeric count. The AP indicates capability information of the numeric count of MSs that the AP supports to establish through the first radio frame, thereby further improving an interaction of sensing capability information.

An embodiment of the present disclosure provides a communication method. Optionally, the method may be performed by an access point. The method may include the following steps: determining a first radio frame, in which the first radio frame includes first identification information; at a first moment, the first identification information indicates a first numeric count of sensing measurement setups (MSs) that the access point supports to establish at the first moment; at a second moment, the first identification information indicates a second numeric count of MSs that the access point supports to establish at the second moment; and the first numeric count is different from the second numeric count; a numeric count of MSs that the access point supports to establish is reduced by one in a case where the access point establishes one MS within one transmission period of the first radio frame; and sending the first radio frame.

The first radio frame is sent periodically, then the numeric count of MSs that the access point supports to establish is reduced by one each time the access point establishes one MS within one transmission period of the first radio frame (for example, the transmission period is 100 milliseconds). For example, within a period of the first moment, the AP sends the first radio frame, and the first identification information indicates that the first numeric count of MSs that the AP may support to establish at this moment is 8; and within the period of the first moment, the AP establishes 1 MS, the type of the MS may be a TB manner, an NTB manner or an SBP manner, then the AP sends the first radio frame again in a case where a period of the second moment arrives, and the first identification information indicates that the second numeric count of MSs that the AP may support to establish at this moment is 7.

An embodiment of the present disclosure provides a communication method. Optionally, the method may be performed by an access point. The method may include the following steps: determining a first radio frame, in which the first radio frame includes first identification information; at a first moment, the first identification information indicates a first numeric count of sensing measurement setups (MSs) that the access point supports to establish at the first moment; at a second moment, the first identification information indicates a second numeric count of MSs that the access point supports to establish at the second moment; and the first numeric count is different from the second numeric count; and sending the first radio frame.

The first identification information indicates that a numeric count of MSs supported by the access point is zero, indicating at least one of following situations 1 to 4.

In situation 1, the access point does not respond to an MS request frame. That is, the AP no longer responds to the MS request frame received to ensure other communication capabilities of the AP; in a case where a communication peer (such as an STA) receives the first identification information, the communication peer may consider that the numeric count of MSs established by the AP has reached its maximum value, and the communication peer may no longer send an MS request.

In situation 2, the access point does not respond to an SBP request frame. That is, the AP no longer responds to the SBP request frame received to ensure other communication capabilities of the AP; in a case where a communication peer (such as an STA) receives the first identification information, the communication peer may consider that the numeric count of MSs established by the AP has reached its maximum value, and the communication peer may no longer send an SBP request.

In situation 3, the access point responds to an MS request frame and sends an MS response frame, a status code in the MS response frame is set to an unsuccess or a decline, and the unsuccess or the decline indicates that the numeric count of MSs established by the AP has exceeded a maximum value that it may support.

In situation 4, the access point responds to an SBP request frame and sends an SBP response frame, and a status code in the SBP response frame is set to an unsuccess or a decline; and the unsuccess or the decline indicates that the numeric count of MSs has e stablished by the AP has exceeded a maximum value that it may support.

An embodiment of the present disclosure provides a communication method. Optionally, the method may be performed by an access point. The method may include a following step: receiving a second radio frame, in which the second radio frame includes second identification information. At a third moment, the second identification information indicates a third numeric count of MSs that a station supports to establish at the third moment; at a fourth moment, the second identification information indicates a fourth numeric count of MSs that the station supports to establish at the fourth moment; and the third numeric count is different from the fourth numeric count.

The AP further receives a second radio frame sent by a STA or other sensing initiator device, obtains second identification information carried in the second radio frame, and determines numeric count information of the MSs that the STA or other sensing responder device supports to establish through the second identification information, to facilitate the subsequent MS establishment.

Specifically, at the third moment, the third identification information indicates the third numeric count of sensing measurement setups (MSs) that the STA supports to establish at the third moment; at the fourth moment, the third identification information indicates the fourth numeric count of MSs that the STA supports to establish at the fourth moment; and the third numeric count is different from the fourth numeric count. For example, in a case where the second radio frame is sent periodically, for example, the third moment and the fourth moment are respectively a time within adjacent transmission periods of sending the second radio frame: in a third period, the AP receives the second radio frame, and the third identification information indicates that the third numeric count of MSs that the STA may support to establish at this moment is M. It can be understood that, in a first transmission period of the first radio frame after the AP establishes an initial association with the STA, M is a maximum value of the numeric count of MSs that the STA may support to establish. Further, in the third period, the STA establishes N MSs, and a type of the MS may be a triggered based sounding (TB) manner, a non-TB based sensing (NTB) manner or an SBP manner. Then, the AP receives the second radio frame again in a case where a fourth period arrives, and the third identification information indicates that the fourth numeric count of MSs that the station may support to establish at this moment is M-N; where M and N are positive integers.

In this way, the AP determines the numeric count information of the MS that the STA may support to establish at a current moment through the third identification information, so that the AP does not blindly send an MS Request frame, saving signaling messages, and ensuring other communication capabilities of a device (such as data communication capabilities, etc.).

It can be understood that in a case where the station fails to successfully establish any MS within a time interval between the third moment and the fourth moment, the third numeric count and the fourth numeric count may also be the same.

Optionally, the second radio frame includes at least one of: an association request frame, a probe request frame, or an MS query frame.

The association request frame is a broadcast message frame, the probe request frame is a unicast message frame, and the MS query frame may be a broadcast message frame or a unicast message frame.

In addition, a new message frame may further be defined to carry the second identification information.

An embodiment of the present disclosure provides a communication method. Optionally, the method may be performed by an access point. The method may include a following step: receiving a second radio frame, in which the second radio frame includes second identification information. At a third moment, the second identification information indicates a third numeric count of MSs that a station supports to establish at the third moment; at a fourth moment, the second identification information indicates a fourth numeric count of MSs that the station supports to establish at the fourth moment; and the third numeric count is different from the fourth numeric count. No MS request frame is sent to the station in a case where the second identification information indicates that a numeric count of MSs supported by the station is zero. That is to say, in a case where the AP determines through the second identification information that the numeric count of MSs that the STA may support to establish at the current moment is zero, the AP no longer sends the MS request frame to save signaling messages and ensure other communication capabilities of the AP (such as data communication capabilities, etc.).

Optionally, in embodiments of the present disclosure, a type of the MS includes at least one of: a triggered based sounding (TB), a non-triggered based sensing (NTB), or an SBP.

A type of the MS established by the AP or the STA may be a triggered based sounding (TB) manner, a non-TB based sensing (NTB) manner or an SBP manner.

In embodiments of the present disclosure, the AP determines and sends the first radio frame, and the first radio frame includes first identification information. At the first moment, the first identification information indicates the first numeric count of sensing measurement setups (MSs) that the access point supports to establish at the first moment; at the second moment, the first identification information indicates the second numeric count of MSs that the access point supports to establish at the second moment; and the first numeric count is different from the second numeric count. The AP indicates capability information of the numeric count of MSs that the AP supports to establish through the first radio frame, thereby further improving an interaction of sensing capability information.

Referring to FIG. 5, an embodiment of the present disclosure provides a communication method. Optionally, the method may be performed by an STA. The method may include a following step.

In step 501, a first radio frame is received. The first radio frame includes first identification information. At a first moment, the first identification information indicates a first numeric count of sensing measurement setups (MSs) that an access point supports to establish at the first moment; at a second moment, the first identification information indicates a second numeric count of MSs that the access point supports to establish at the second moment; and the first numeric count is different from the second numeric count.

For an architecture of WLAN sensing and a WLAN sensing process applied in the communication method according to embodiments of the present disclosure, reference may be made to the aforementioned first example, which will not be elaborated here.

During an establishment of a sensing session, the sensing initiator and the sensing responder need to interact in terms of sensing capability information to facilitate the subsequent MS establishment; a capability that need to be interacted with include, for example, a capability for supporting the sensing, a capability for supporting the sensing by proxy (SBP), and a BW capability for supporting the sensing measurement. After both parties understand this capability information, an MS establishment process may be performed.

In embodiments of the present disclosure, the STA receives a first radio frame sent by the AP or other sensing responder device, obtains the first identification information carried in the first radio frame, and determines numeric count information of the MS that the AP supports to establish through the first identification information, to facilitate the subsequent MS establishment.

At the first moment, the first identification information indicates the first numeric count of sensing measurement setups (MSs) that the access point supports to establish at the first moment; at the second moment, the first identification information indicates the second numeric count of MSs that the access point supports to establish at the second moment; and the first numeric count is different from the second numeric count. For example, in a case where the first radio frame is sent periodically, for example, the first moment and the second moment are respectively a time within adjacent transmission periods of sending the first radio frame: in a first period, the AP sends the first radio frame, and the first identification information indicates that the first numeric count of MSs that the AP may support to establish at this moment is M. It can be understood that, in a first transmission period of the first radio frame after the AP establishes an initial association with the STA, M is a maximum value of the numeric count of MSs that the AP may support to establish. Further, in the first period, the AP establishes N MSs, and a type of the MSs may be a triggered based sounding (TB) manner, a non-TB based sensing (NTB) manner or an SBP manner. Then, the AP sends the first radio frame again in a case where a second period arrives, and the first identification information indicates that the second numeric count of MSs that the AP may support to establish at this moment is M-N; where M and N are positive integers.

In this way, the STA determines the numeric count information of the MS that the AP may support to establish at a current moment through the first identification information, so that the STA does not blindly send an MS request frame or an SBP request frame, saving signaling messages and ensuring other communication capabilities of the STA (such as data communication capabilities, etc.).

It can be understood that in a case where the AP fails to successfully establish any MS within a time interval between the first moment and the second moment, the first numeric count and the second numeric count may also be the same.

Optionally, in embodiments of the present disclosure, the first radio frame includes at least one of: a beacon frame, a probe response frame, or an unsolicited probe response frame. The first radio frame may be a broadcast message frame.

In embodiments of the present disclosure, the STA receives the first radio frame, obtains the first identification information carried in the first radio frame, and determines the numeric count information of the MS that the AP supports to establish through the first identification information, which further improves an interaction of sensing capability information.

An embodiment of the present disclosure provides a communication method. Optionally, the method may be performed by an STA. The method may include a following step: receiving a first radio frame, in which the first radio frame includes first identification information. At a first moment, the first identification information indicates a first numeric count of sensing measurement setups (MSs) that an access point supports to establish at the first moment; at a second moment, the first identification information indicates a second numeric count of MSs that the access point supports to establish at the second moment; and the first numeric count is different from the second numeric count.

The station does not send an MS request frame and/or a sensing by proxy (SBP) request frame to the access point in a case the first identification information indicates that a numeric count of MSs supported by the access point is zero.

In a case where the STA determines through the second identification information that the numeric count of MSs that the AP may support to establish at the current moment is zero, the STA no longer sends the MS Request frame to save signaling messages and ensure other communication capabilities of the STA (such as data communication capabilities, etc.).

An embodiment of the present disclosure provides a communication method. Optionally, the method may be performed by a station. The method may include the following steps: determining a second radio frame, in which the second radio frame includes second identification information; at a third moment, the second identification information indicates a third numeric count of MSs that the station supports to establish at the third moment; at a fourth moment, the second identification information indicates a fourth numeric count of MSs that the station supports to establish at the fourth moment; and the third numeric count is different from the fourth numeric count; and sending the second radio frame.

The STA sends the second radio frame to the AP or other sensing initiator device. The second radio frame carries the second identification information, and the STA indicates the numeric count information of the MS that the STA supports to establish through the second identification information.

Specifically, at the third moment, the third identification information indicates the third numeric count of sensing measurement setups (MSs) that the STA supports to establish at the third moment; at the fourth moment, the third identification information indicates the fourth numeric count of MSs that the STA supports to establish at the fourth moment; and the third numeric count is different from the fourth numeric count. For example, in a case where the second radio frame is sent periodically, for example, the third moment and the fourth moment are respectively a time within adjacent transmission periods of sending the second radio frame: in a third period, the STA sends the second radio frame, and the third identification information indicates that the third numeric count of MSs that the STA may support to establish at this moment is M. It can be understood that, in a first transmission period of the first radio frame after the AP establishes an initial association with the STA, M is a maximum value of the numeric count of MSs that the STA may support to establish. Further, in the third period, the STA establishes N MSs, and a type of the MS may be a triggered based sounding (TB) manner, a non-TB based sensing (NTB) manner or an SBP manner. Then, the STA sends the second radio frame again in a case where a fourth period arrives, and the third identification information indicates that the fourth numeric count of MSs that the STA may support to establish at this moment is M-N; where M and N are positive integers.

In this way, the STA indicates the numeric count information of the MS that the STA may support to establish at a current moment through the third identification information, so that the AP or other devices does not blindly send an MS Request frame, saving signaling messages, and ensuring other communication capabilities of a device (such as data communication capabilities, etc.).

It can be understood that in a case where the station fails to successfully establish any MS within a time interval between the third moment and the fourth moment, the third numeric count and the fourth numeric count may also be the same.

An embodiment of the present disclosure provides a communication method. Optionally, the method may be performed by a station. The method may include the following steps: determining a second radio frame, in which the second radio frame includes second identification information; at a third moment, the second identification information indicates a third numeric count of MSs that the station supports to establish at the third moment; at a fourth moment, the second identification information indicates a fourth numeric count of MSs that the station supports to establish at the fourth moment; and the third numeric count is different from the fourth numeric count; and sending the second radio frame. The second identification information indicates that a numeric count of MSs supported by the station is zero, indicating a following situation 5 or situation 6.

In situation 5, the station does not respond to an MS request frame. That is, the STAno longer responds to the MS request frame received to ensure other communication capabilities of the AP.

In situation 6, the station responds to an MS request frame and sends an MS response frame, and a status code in the MS response frame is set to an unsuccess or a decline. The status code in the MS response frame is set to the unsuccess) or the decline, and the unsuccess or the decline indicates that the numeric count of MSs established by the STA has exceeded a maximum value that it may support.

An embodiment of the present disclosure provides a communication method. Optionally, the method may be performed by a station. The method may include the following steps: determining a second radio frame, in which the second radio frame includes second identification information; at a third moment, the second identification information indicates a third numeric count of MSs that the station supports to establish at the third moment; at a fourth moment, the second identification information indicates a fourth numeric count of MSs that the station supports to establish at the fourth moment; and the third numeric count is different from the fourth numeric count; and sending the second radio frame in an initial association process, in which the second radio frame includes an association request frame or a probe request frame; and the station is an associated-STA (A-STA).

The A-STA sends the second radio frame in the initial association process established with the AP, the second radio frame carries numeric count information of the MS that the A-STA supports, and the second radio frame is, for example, a probe request frame (broadcast message frame) or an association request frame (unicast frame).

An embodiment of the present disclosure provides a communication method. Optionally, the method may be performed by a station. The method may include the following steps: determining a second radio frame, in which the second radio frame includes second identification information; at a third moment, the second identification information indicates a third numeric count of MSs that the station supports to establish at the third moment; at a fourth moment, the second identification information indicates a fourth numeric count of MSs that the station supports to establish at the fourth moment; and the third numeric count is different from the fourth numeric count; and sending the second radio frame. The second radio frame includes an MS query frame; and the station is an unassociated-STA (U-STA).

The U-STA may carry numeric count information of the MS that it supports in the MS query frame, and the MS query frame is a unicast message frame or a broadcast message frame.

Optionally, in embodiments of the present disclosure, a type of the MS includes at least one of: a triggered based sounding (TB), a non-triggered based sensing (NTB), or an SBP.

A type of the MS established by the AP or the STA may be a triggered based sounding (TB) manner, a non-TB based sensing (NTB) manner or an SBP manner.

Referring to FIG. 6, based on the same principle as the method according to embodiments of the present disclosure, embodiments of the present disclosure further provide an electronic device, which is an access point and includes: a determining module 601 configured to determine a first radio frame, in which the first radio frame includes first identification information; at a first moment, the first identification information indicates a first numeric count of sensing measurement setups (MSs) that the access point supports to establish at the first moment; at a second moment, the first identification information indicates a second numeric count of MSs that the access point supports to establish at the second moment; and the first numeric count is different from the second numeric count; and a sending module 602 configured to send the first radio frame.

Optionally, in embodiments of the present disclosure, the determining module 601 is further configured to reduce a numeric count of MSs that the access point supports to establish by one in a case where the access point establishes one MS within one transmission period of the first radio frame.

Optionally, in embodiments of the present disclosure, the first identification information indicates that a numeric count of MSs supported by the access point is zero, indicating at least one of: the access point not responding to an MS request frame; the access point not responding to a sensing by proxy (SBP) request frame; the access point responding to an MS request frame and sending an MS response frame, in which a status code in the MS response frame is set to an unsuccess or a decline; or the access point responding to an SBP request frame and sending an SBP response frame, in which a status code in the SBP response frame is set to an unsuccess or a decline.

Optionally, in embodiments of the present disclosure, the first radio frame includes at least one of: a beacon frame, a probe response frame, or an unsolicited probe response frame.

Optionally, in embodiments of the present disclosure, the electronic device further includes: a second receiving module configured to receive a second radio frame, and the second radio frame includes second identification information. At a third moment, the second identification information indicates a third numeric count of MSs that a station supports to establish at the third moment; at a fourth moment, the second identification information indicates a fourth numeric count of MSs that the station supports to establish at the fourth moment; and the third numeric count is different from the fourth numeric count.

Optionally, in embodiments of the present disclosure, the access point does not send an MS request frame to the station in a case where the second identification information indicates that a numeric count of MSs supported by the station is zero.

Optionally, in embodiments of the present disclosure, the second radio frame includes at least one of: an association request frame, a probe request frame, or an MS query frame.

Optionally, in embodiments of the present disclosure, a type of the MS includes at least one of: a triggered based sounding (TB), a non-triggered based sensing (NTB), or an SBP.

Embodiments of the present disclosure further provide a communication apparatus, which is applied to an access point and includes: a radio frame determining module configured to determine a first radio frame, in which the first radio frame includes first identification information; at a first moment, the first identification information indicates a first numeric count of sensing measurement setups (MSs) that the access point supports to establish at the first moment; at a second moment, the first identification information indicates a second numeric count of MSs that the access point supports to establish at the second moment; and the first numeric count is different from the second numeric count; and a radio frame sending module configured to send the first radio frame.

The apparatus further includes other modules of the electronic device in the aforementioned embodiments, which will not be described in detail here.

Referring to FIG. 7, based on the same principle as the method according to embodiments of the present disclosure, embodiments of the present disclosure further provide an electronic device, which is a station and includes: a receiving module 701 configured to receive a first radio frame, and the first radio frame includes first identification information. At a first moment, the first identification information indicates a first numeric count of measurement setups (MSs) that an access point supports to establish at the first moment; at a second moment, the first identification information indicates a second numeric count of MSs that the access point supports to establish at the second moment; and the first numeric count is different from the second numeric count.

Optionally, in embodiments of the present disclosure, the station does not send an MS request frame and/or a sensing by proxy (SBP) request frame to the access point in a case where the first identification information indicates that a numeric count of MSs supported by the access point is zero.

Optionally, in embodiments of the present disclosure, the first radio frame includes at least one of: a beacon frame, a probe response frame, or an unsolicited probe response frame.

Optionally, in embodiments of the present disclosure, the electronic device further includes: a second determining module configured to determine a second radio frame, in which the second radio frame includes second identification information; at a third moment, the second identification information indicates a third numeric count of MSs that the station supports to establish at the third moment; at a fourth moment, the second identification information indicates a fourth numeric count of MSs that the station supports to establish at the fourth moment; and the third numeric count is different from the fourth numeric count; and a second sending module configured to send the second radio frame.

Optionally, in embodiments of the present disclosure, in a case where the second identification information indicates that a numeric count of MSs supported by the station is zero, the station does not respond to an MS request frame, or responds to an MS request frame and sends an MS response frame and a status code in the MS response frame is set to an unsuccess or a decline.

Optionally, in embodiments of the present disclosure, sending the second radio frame includes at least one of: the station being an associated station, and sending the second radio frame in an initial association process, in which the second radio frame includes an association request frame or a probe request frame; or the station being an unassociated station, and sending the second radio frame, in which the second radio frame includes an MS query frame.

Optionally, in embodiments of the present disclosure, a type of the MS includes at least one of: a triggered based sounding (TB), a non-triggered based sensing (NTB), or an SBP.

Embodiments of the present disclosure further provide a communication apparatus, which is applied to a station and includes: a radio frame receiving module configured to receive a first radio frame, and the first radio frame includes first identification information. At a first moment, the first identification information indicates a first numeric count of measurement setups (MSs) that an access point supports to establish at the first moment; at a second moment, the first identification information indicates a second numeric count of MSs that the access point supports to establish at the second moment; and the first numeric count is different from the second numeric count.

The apparatus further includes other modules of the electronic device in the aforementioned embodiments, which will not be described in detail here.

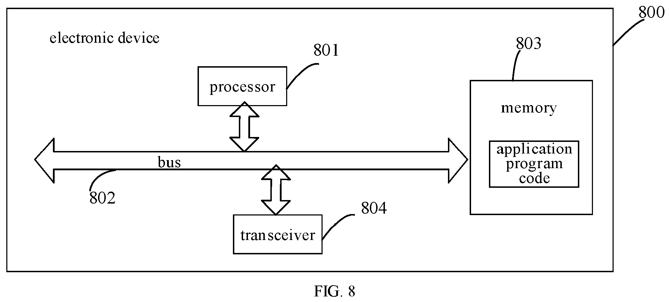

In an optional embodiment, an embodiment of the present disclosure further provides an electronic device, as shown in FIG. 8. The electronic device 800 shown in FIG. 8 may be a server, including: a processor 801 and a memory 803. The processor 801 and the memory 803 are connected, for example, through a bus 802. Optionally, the electronic device 800 may further include a transceiver 804. It should be noted that in actual applications, the number of the transceivers 804 is not limited to one, and the structure of the electronic device 800 does not constitute a limitation on the embodiments of the disclosure.

The processor 801 may be a central processing unit (CPU), a general-purpose processor, a digital signal processor (DSP), an application specific integrated circuit (ASIC), a field programmable gate array (FPGA), or other programmable logic devices, transistor logic devices, hardware components, or any combination thereof. The processor 801 may implement or execute various exemplary logical blocks, modules, and circuits described in conjunction with the contents of the present disclosure. The processor 801 may also be a combination that implements computing functions, such as a combination of one or more microprocessors, a combination of a DSP and a microprocessor, etc.

The bus 802 may include a path to transmit information between the above components. The bus 802 may be a peripheral component interconnect (PCI) bus, an extended industry standard architecture (EISA) bus, or the like. The bus 802 can be divided into an address bus, a data bus, a control bus, etc. For ease of representation, FIG. 8 illustrates only one thick line, but this does not mean that there is only one bus or one type of bus.

The memory 803 may be a read only memory (ROM) or other types of static storage devices that may store static information and instructions, or a random access memory (RAM) or other types of dynamic storage devices that may store information and instructions; and the memory 803 may also be an electrically erasable programmable read only memory (EEPROM), a compact disc read only memory (CD-ROM), or other optical disk storage media or optical disc storage media (including a compressed optical disk, a laser disk, an optical disk, a digital versatile disk, a Blu-ray disk, etc.), a magnetic disk storage medium or other magnetic storage devices, or any other medium that may be used to carry or store the desired program codes in the form of instructions or data structures and may be accessed by a computer, but is not limited to this.

The memory 803 is configured to store application program codes for executing the solution of the present disclosure, and the execution is controlled by the processor 801. The processor 801 is used to execute the application program codes stored in the memory 803 to implement the contents shown in the aforementioned method embodiments.

The electronic device includes, but is not limited to: a mobile terminal such as a mobile phone, a laptop, a digital broadcast receiver, a personal digital assistant (PDA), a tablet computer (PAD), a portable multimedia player (PMP), a vehicle-mounted terminal (such as a vehicle-mounted navigation terminal), etc.; and a fixed terminal such as a digital television (TV), a desktop computer, etc. The electronic device shown in FIG. 8 is merely an example and should not limit the functions and use scope of the embodiments of the disclosure in any way.

The server provided in the present disclosure may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, content distribution network (CDN), as well as big data and artificial intelligence platforms. The terminal may be a smart phone, a tablet computer, a laptop computer, a desktop computer, a smart speaker, a smart watch, etc., but is not limited thereto. The terminal and the server may be connected directly or indirectly through wired or wireless communication, which is not limited in the present disclosure.

An embodiment of the present disclosure provides a computer-readable storage medium, on which a computer program is stored. When the computer program runs on a computer, the computer may execute the corresponding contents in the aforementioned method embodiments.

It should be understood that, although the steps in the flowchart of the accompanying drawings are displayed sequentially as indicated by the arrows, these steps are not necessarily executed sequentially in an order indicated by the arrows. Unless otherwise specified herein, there is no strict order limitation for the execution of these steps, and these steps may be executed in other orders. Moreover, at least some of the steps in the flowchart of the accompanying drawings may include a plurality of sub-steps or a plurality of stages. These sub-steps or stages are not necessarily executed at the same time, but may be executed at different times. The order of execution of these steps is not necessarily sequential, but these steps may be executed in turn or alternately with other steps or at least some of sub-steps or stages of other steps.

It should be noted that the above-mentioned computer-readable medium in the present disclosure may be a computer-readable signal medium, or a computer-readable storage medium, or any combination of the above two media. The computer-readable storage medium may be, for example, but is not limited to, an electronic, magnetic, optical, electromagnetic, infrared, or semiconducting system, apparatus, or device, or any combination of the foregoing. The more specific examples of the computer-readable storage medium may include, but are not limited to, an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, the computer-readable storage medium may be any tangible medium that can contain or store a program for use by or in connection with an instruction execution system, apparatus, or device. In the present disclosure, the computer-readable signal medium may include a data signal propagated in a baseband or as a part of a carrier wave, in which computer-readable program codes are carried. Such a propagated data signal may take a variety of forms, including but not limited to electromagnetic signals, optical signals, or any suitable combination of the foregoing. The computer-readable signal medium may also be any computer-readable medium other than computer-readable storage media, which may send, propagate or transport a program for use by or in conjunction with an instruction execution system, apparatus or device. The program code embodied on the computer-readable medium may be transmitted using any appropriate medium, including but not limited to: a wire, an optical cable, a radio frequency (RF), or the like, or any suitable combination of the foregoing.

The above-mentioned computer-readable medium may be included in the above-mentioned electronic device, or may exist independently without being incorporated into the electronic device.

The above-mentioned computer-readable medium carries one or more programs. When the one or more programs are executed by the electronic device, the electronic device is configured to execute the method shown in the above embodiments.

According to one aspect of the present disclosure, a computer program product or a computer program is provided, including computer instructions stored in a computer-readable storage medium. A processor of a computer device reads the computer instructions from the computer-readable storage medium and executes the computer instructions, so that the computer device executes the method in the above various optional implementations.

The computer program codes for performing operations in the present disclosure may be written in one or more programming languages or their combination, including object-oriented programming languages such as Java, Smalltalk, C++, or conventional procedural programming languages such as "C" or similar programming languages. The program codes may be executed entirely on a user computer, partly on the user computer, as a stand-alone software package, partly on the user computer and partly on a remote computer, or entirely on the remote computer or a server. In case of involving a remote computer, the remote computer may be connected to the user computer through any type of network, including a local area network (LAN) or a wide area network (WAN), or may be connected to an external computer (e.g., through the Internet using an Internet service provider).

The flowcharts and block diagrams in the accompanying drawings illustrate possibly implemented architectures, functions, and operations of systems, methods, and computer program products according to various embodiments of the present disclosure. In this regard, each block in the flowchart or block diagram may represent a module, a program segment, or a portion of code, which contains one or more executable instructions for implementing the specified logical functions. It should also be noted that, in some alternative implementations, the functions noted in the block may occur out of the order noted in the drawings. For example, two blocks shown in succession may actually be executed substantially in parallel, or they may sometimes be executed in the reverse order, depending on the functionality involved. It should also be noted that each block in the block diagram and/or flowchart, and a combination of blocks in the block diagram and/or flowchart, may be implemented by a dedicated hardware-based system that performs the specified functions or operations, or may be implemented by a combination of dedicated hardware and computer instructions.

The modules described and involved in the embodiments of the present disclosure may be implemented in software or hardware. The name of a module does not, in some cases, constitute a limitation on the module itself. For example, module A can also be described as "module A for performing operation B".

The above description is only a preferred embodiment of the present disclosure and an illustration of the technical principles used. Those skilled in the art should understand that the scope of disclosure involved in the present disclosure is not limited to the technical solutions formed by a specific combination of the above-mentioned technical features, but should also cover other technical solutions formed by any combination of the above-mentioned technical features or their equivalent features without departing from the above-mentioned concepts of the present disclosure. For example, the above-mentioned features are replaced with the technical features with similar functions disclosed in the present disclosure (but not limited to this) to form a technical solution.

## Claims

1. A communication method, performed by an access point, comprising:
determining a first radio frame, wherein the first radio frame comprises first identification information;
wherein, at a first moment, the first identification information indicates a first numeric count of sensing measurement setups (MSs) that the access point supports to establish at the first moment; at a second moment, the first identification information indicates a second numeric count of MSs that the access point supports to establish at the second moment; and the first numeric count is different from the second numeric count; and
sending the first radio frame.

2. The communication method according to claim 1, further comprising:
reducing a numeric count of MSs that the access point supports to establish by one in a case where the access point establishes one MS within one transmission period of the first radio frame.

3. The communication method according to claim 1, wherein the first identification information indicates that a numeric count of MSs supported by the access point is zero, indicating at least one of:
the access point not responding to an MS request frame;
the access point not responding to a sensing by proxy (SBP) request frame;
the access point responding to an MS request frame and sending an MS response frame, wherein a status code in the MS response frame is set to an unsuccess or a decline; or
the access point responding to an SBP request frame and sending an SBP response frame, wherein a status code in the SBP response frame is set to an unsuccess or a decline.

4. The communication method according to claim 1, wherein the first radio frame comprises at least one of:
a beacon frame, a probe response frame, or an unsolicited probe response frame.

5. The communication method according to claim 1, further comprising:
receiving a second radio frame, wherein the second radio frame comprises second identification information;
wherein, at a third moment, the second identification information indicates a third numeric count of MSs that a station supports to establish at the third moment; at a fourth moment, the second identification information indicates a fourth numeric count of MSs that the station supports to establish at the fourth moment; and the third numeric count is different from the fourth numeric count.

6. The communication method according to claim 5, wherein no MS request frame is sent to the station in a case where the second identification information indicates that a numeric count of MSs supported by the station is zero.

7. The communication method according to claim 5, wherein the second radio frame comprises at least one of:
an association request frame, a probe request frame, or an MS query frame.

8. The communication method according to any one of claims 1 to 7, wherein a type of the MS comprises at least one of:
a triggered based sounding (TB), a non-triggered based sensing (NTB), or an SBP.

9. A communication method, performed by a station, comprising:
receiving a first radio frame, wherein the first radio frame comprises first identification information;
wherein, at a first moment, the first identification information indicates a first numeric count of sensing measurement setups (MSs) that an access point supports to establish at the first moment; at a second moment, the first identification information indicates a second numeric count of MSs that the access point supports to establish at the second moment; and the first numeric count is different from the second numeric count.

10. The communication method according to claim 9, wherein the station does not send an MS request frame and/or a sensing by proxy (SBP) request frame to the access point in a case where the first identification information indicates that a numeric count of MSs supported by the access point is zero.

11. The communication method according to claim 9, wherein the first radio frame comprises at least one of:
a beacon frame, a probe response frame, or an unsolicited probe response frame.

12. The communication method according to claim 9, further comprising:
determining a second radio frame, wherein the second radio frame comprises second identification information;
wherein, at a third moment, the second identification information indicates a third numeric count of MSs that the station supports to establish at the third moment; at a fourth moment, the second identification information indicates a fourth numeric count of MSs that the station supports to establish at the fourth moment; and the third numeric count is different from the fourth numeric count; and
sending the second radio frame.

13. The communication method according to claim 12, wherein in a case where the second identification information indicates that a numeric count of MSs supported by the station is zero, the station does not respond to an MS request frame; or responds to an MS request frame and sends an MS response frame, wherein a status code in the MS response frame is set to an unsuccess or a decline.

14. The communication method according to claim 12, wherein sending the second radio frame comprises at least one of:
the station being an associated station, and sending the second radio frame in an initial association process, wherein the second radio frame comprises an association request frame or a probe request frame; or
the station being an unassociated station, and sending the second radio frame, wherein the second radio frame comprises an MS query frame.

15. The communication method according to any one of claims 9 to 14, wherein a type of the MS comprises at least one of:
a triggered based sounding (TB), a non-triggered based sensing (NTB), or an SBP.

16. An electronic device, being an access point, comprising:
a determining module configured to determine a first radio frame, wherein the first radio frame comprises first identification information;
wherein, at a first moment, the first identification information indicates a first numeric count of sensing measurement setups (MSs) that the access point supports to establish at the first moment; at a second moment, the first identification information indicates a second numeric count of MSs that the access point supports to establish at the second moment; and the first numeric count is different from the second numeric count; and
a sending module configured to send the first radio frame.

17. An electronic device, being a station, comprising:
a receiving module configured to receive a first radio frame, wherein the first radio frame comprises first identification information;
wherein, at a first moment, the first identification information indicates a first numeric count of measurement setups (MSs) that an access point supports to establish at the first moment; at a second moment, the first identification information indicates a second numeric count of MSs that the access point supports to establish at the second moment; and the first numeric count is different from the second numeric count.

18. An electronic device, comprising a memory, a processor, and a computer program stored in the memory and executable on the processor, wherein the processor implements the method according to any one of claims 1 to 8 or the method according to any one of claims 9 to 15 when executing the program.

19. A computer-readable storage medium having stored therein a computer program that, when executed by a processor, causes the method according to any one of claims 1 to 8 or the method according to any one of claims 9 to 15 to be implemented.
